# EUROPEAN PATENT SPECIFICATION

(11) **EP 2 892 182 B1**
(45) Date of publication and mention of the grant of the patent: **12.06.2019**
(21) Application number: 14197105.1
(22) Date of filing: 10.12.2014
(51) Int. Cl.: H04L 12/24, H04L 29/08, G06F 16/955

(54) **A network element for a data transfer network**
Netzwerkelement für ein Datenübertragungsnetzwerk
Élément de réseau pour un réseau de transfert de données

(30) Priority: 16.12.2013 FI 20136268
(43) Date of publication of application: 08.07.2015
(73) Proprietor: Coriant Oy, 02630 Espoo (FI)
(72) Inventor: Kaivosoja, Vesa, 02130 Espoo (FI); Nieminen, Juha-Petteri, 02280 Espoo (FI)
(74) Representative: Finnpatent Oy

(56) References cited:
- EP-A2- 1 202 493
- US-A1- 2004 019 670
- US-A1- 2012 155 467
- US-B1- 8 284 699
- "OPENFLOW SWITCH SPECIFICATION VERSION 1.1.0 IMPLEMENTED", INTERNET CITATION, 28 February 2011 (2011-02-28), pages 1-56, XP008166938, Retrieved from the Internet: URL:http://web.archive.org/web/20110516201 950/http://www.openflow.org/documents/open flow-spec-v1.1.0.pdf [retrieved on 2014-01-24]

## Description

### Field of the invention

The invention relates generally to data transfer networks. A data transfer network can be, for example but not necessarily, a software-defined network "SDN". More particularly, the invention relates to a network element for a data transfer network. Furthermore, the invention relates to a method and to a computer program product for configuring a network element of a data transfer network.

### Background

A network element of a data transfer network may have a modular architecture so that the network element comprises functional entities capable of transferring data between each other. The network element can be, for example, an Internet Protocol "IP" router, a multiprotocol label switching "MPLS" node, a packet optical switch, and/or an Ethernet switch. Each functional entity can be, for example, a line interface module of the network element or a part of a line interface module such as an egress-side of the line interface module or an ingress-side of the line interface module. On the other hand, it is also possible that a functional entity includes two or more separate physical entities. For example, a functional entity may comprise e.g. a line interface module and e.g. a switch fabric module. Furthermore, it is also possible that two functional entities share a same physical entity, e.g. a first functional entity may comprise a first line interface module and a switch fabric module, and a second functional entity may comprise a second line interface module and the switch fabric module. Yet furthermore it is also possible that a functional entity is a process implemented with software and run by hardware that can be adapted to run also other software implemented processes.

In many network elements, each functional entity is adapted to construct its own configuration system with the aid of which the functional entity under consideration is able to co-operate with the other functional entities of the network element so that the whole network element is capable of operating as a part of the data transfer network. The arrangement of the kind described above is, however, not free from challenges. One of the challenges is related to the need to keep the configuration systems of different functional entities congruent with each other in all situations because non-congruence would cause severe functional troubles. Another challenge is related to the data transfer that is needed between the functional entities when the functional entities construct and/or update their configuration systems. In network elements comprising many functional entities, the amount of the required data transfer may represent a significant workload.

Publication US8284699 describes a system for configuring network elements. The system comprises a central management system that stores shared configuration objects in a central configuration database. A network element stores i) shared configuration objects and ii) device-specific configuration objects in a local configuration database. The shared configuration objects of the local configuration database correspond to shared configuration objects in the central configuration database. If the central management system receives a request to update a value of a first shared configuration object in the central configuration database with a new value, the central management system updates the value of the first shared configuration object in the central configuration database with the new value. Furthermore, the central management system selects those of the network elements which store a configuration object corresponding to the first shared configuration object of the central configuration database in the local configuration database and which are associated with the first shared configuration object so that the first shared configuration object is used to configure how these network elements process data packets. The central management system sends the above-mentioned new value to the selected network elements. Each selected network element updates a value of its configuration object corresponding to the first shared configuration object with the new value. If a network element receives a request to update the value of the first shared configuration object in the local configuration database with another new value and this request did not originate from the central management system, the network element sends a notification to the central management system. The central management system, responsive to the notification, performs actions including: creating a second configuration object in the central configuration database, updating the respective value of the second configuration object with the other new value, associating the second configuration object with the network element, and disassociating the first shared configuration object from the network element. The above-described system enables network administrators to manage the network elements at the central management system in a centralized way as well as locally at the network elements so that changing a configuration locally at a network element does not have an impact on the configurations of other network elements and configurations of one or more network elements can be changed in the centralized way at the central management system. The above-described system does not, however, provide a solution to the challenges related to the need to keep configurations of different functional entities of a network element congruent with each other and to the amount of configuration data traffic between the functional entities within the network element.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new method for configuring a network element of a data transfer network, where the network element comprises functional entities each being adapted to maintain an entity-specific configuration system which comprises configuration entries with the aid of which the functional entity under consideration is able to co-operate with the other functional entities of the network element so that the network element is capable of operating as a part of the data transfer network.

A method according to the invention comprises:
- maintaining a database that is writeable and readable by each of the functional entities of the network element, the database being a part of the network element,
- writing, to the database, a first part of one of the configuration entries by a first one of the functional entities,
- writing, to the database, a second part of the one of the configuration entries by a second one of the functional entities,
- reading the one of the configuration entries from the database, and
- implementing the one of the configuration entries into the configuration system of the first one of the functional entities.

The above-mentioned database that is commonly used by the functional entities of the network element facilitates maintaining the congruence between the functional entities. In addition to data related to the configuration entries, the database can be used for delivering other information between the functional entities. The other information may comprise for example messages related to negotiations between the functional entities. Furthermore, the database may contain data expressing allocation of data processing resources of the network element for different usages and/or applications.

In accordance with the invention, there is provided also a new network element for a data transfer network. The network element can be, for example, an Internet Protocol "IP" router, a multiprotocol label switching "MPLS" switch, a packet optical switch, and/or an Ethernet switch. A network element according to the invention comprises functional entities each being adapted to maintain an entity-specific configuration system which comprises configuration entries with the aid of which the functional entity under consideration is able to co-operate with the other functional entities in a way that the network element is capable of operating as a part of the data transfer network. The network element further comprises memory for maintaining a database that is writeable and readable by each of the functional entities. The functional entities of the network element are such that an exemplifying configuration entry related to one or more of the functional entities is composed of data items written by many functional entities to the database, and thereafter the relevant one or more functional entities can read the configuration entry from the database and implement the configuration entry into the one or more configuration systems of these one or more functional entities.

In accordance with the invention, there is provided also a new computer program product for configuring a network element of a data transfer network, where the network element comprises functional entities each being adapted to maintain an entity-specific configuration system which comprises configuration entries with the aid of which the functional entity under consideration is able to co-operate with the other functional entities in a way that the network element is capable of operating as a part of the data transfer network. A computer program product according to the invention comprises computer executable instructions for:
- controlling a programmable processing system related to a first one of the functional entities to write, to a database of the network element, a first part of one of the configuration entries, the database being writeable and readable by each of the functional entities,
- controlling a programmable processing system related to a second one of the functional entities to write, to the database, a second part of the one of the configuration entries,
- controlling the programmable processing system related to the first one of the functional entities to read the one of the configuration entries from the database, and
- controlling the programmable processing system related to the first one of the functional entities to implement the one of the configuration entries into the configuration system of the first one of the functional entities.

The above-mentioned data transfer network can be, for example but not necessarily, a software-defined network "SDN" where the control plane is separated from the data plane so that the control plane is implemented in one or more controllers that can be separate from data-forwarding network elements of the software-defined network and the data plane is implemented in the data-forwarding network elements.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

The exemplifying and non-limiting embodiments of the invention and their advantages are explained in greater detail below with reference to the accompanying drawings, in which:
figure 1 shows a schematic illustration of a data transfer network comprising at least one network element according to an exemplifying embodiment of the invention,
figure 2 shows a schematic illustration of a network element according to an exemplifying embodiment of the invention, and
figure 3 shows a flow chart of a method according to an exemplifying embodiment of the invention for configuring a network element of a data transfer network.

### Description of exemplifying embodiments

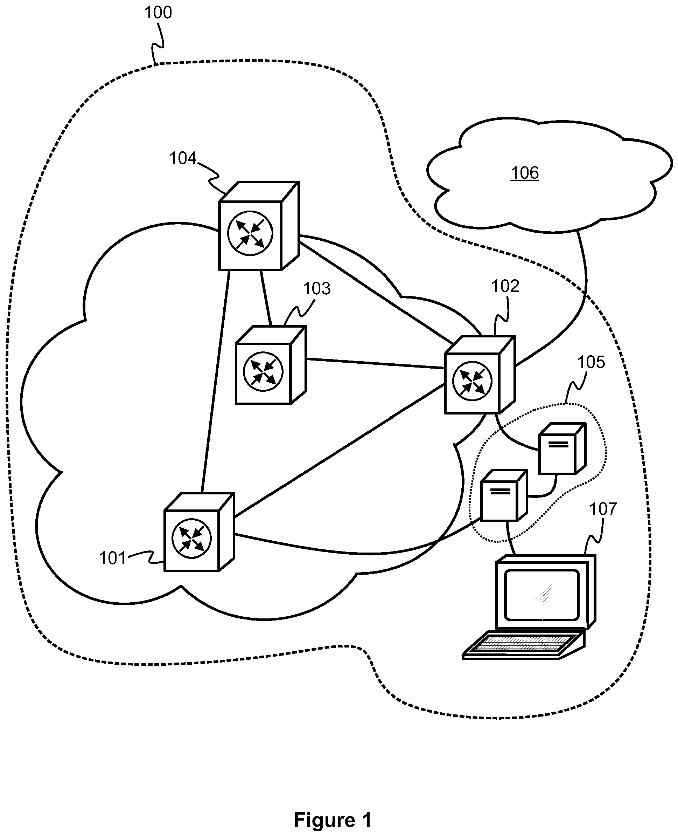

Figure 1 shows a schematic illustration of an exemplifying data transfer network 100. In this exemplifying case, the data transfer network is a software-defined network "SDN" but it is worth noting that it is not necessary that the data transfer network is a software-defined network. The data transfer network comprises network elements 101, 102, 103, and 104 and a controller 105. The network elements 101-104 of this exemplifying data transfer network are mutually interconnected with data transfer links as illustrated in figure 1. The network element 102 acts as a gateway to an external network 106 that can be e.g. the global Internet. Furthermore, the exemplifying data transfer network 100 may comprise other network elements that are not shown in figure 1. Each of the network elements may be e.g. an Internet Protocol "IP" router, a multiprotocol label switching "MPLS" node, a packet optical switch, and/or an Ethernet switch. Each network element may consist of a single apparatus or a combination of a plurality of apparatuses. As well, the controller 105 may consist of a single apparatus or a combination of a plurality of apparatuses. In the exemplifying case illustrated in figure 1, the controller 105 comprises two interconnected apparatuses. Furthermore, a terminal device 107 is connected to the controller 105. The controller 105 comprises a data transfer interface for receiving data from the terminal device 107 and/or from one or more other devices connected with data transfer links to the data transfer interface of the controller. It is to be noted that the controller 105 or one or more parts of it can also act as one or more network elements that can be e.g. an Internet Protocol "IP" router, a multiprotocol label switching "MPLS" switch, a packet optical switch, and/or an Ethernet switch.

In this exemplifying case where the data transfer network 100 is a software-defined network "SDN", the controller 105 is adapted to send, to at least one of the network elements 101-104, configuration data that comprises data items for configuring the network element under consideration to manage data in a desired manner. The data that is managed by the network elements can be in a form of data frames such as for example Internet Protocol IP-packets, MPLS-labeled frames, Ethernet frames, or the data can be in some other form accordant with one or more data transfer protocols being used. The controller 105 can be adapted to deliver the configuration data to the network element under consideration in accordance with the OpenFlow or some other suitable protocol. More details about the above-mentioned OpenFlow can be found from "OpenFlow Switch Specification" managed by the Open Networking Foundation "ONF". The configuration data may define for example a system of interconnected look-up tables defining actions to be carried out in different operational situations. An action defined by the configuration data may comprise for example: recording data into memory, modifying the data, selecting one or more of egress ports of the network element and forwarding the data and its possible duplicates to the selected one or more egress ports, selecting one or more look-up tables of the system of interconnected look-up tables and executing one or more look-ups from the selected look-up tables, performing arithmetic operations, branching operations, performing logical operations, reading metadata associated with the data being managed, writing metadata associated with the data, modifying metadata associated with the data, discarding the data, and/or duplicating the data.

At least one of the network elements 101-104 is assumed have a modular architecture so that the network element under consideration comprises functional entities capable of transferring data between each other. Each functional entity can be, for example, a line interface module of the network element or a part of a line interface module such as an egress-side of the line interface module or an ingress-side of the line interface module. On the other hand, it is also possible that a functional entity includes two or more separate physical entities. For example, a functional entity may comprise e.g. a line interface module and e.g. a switch fabric module. Furthermore, it is also possible that two functional entities share a same physical entity, e.g. a first functional entity may comprise a first line interface module and a switch fabric module, and a second functional entity may comprise a second line interface module and the switch fabric module. Furthermore it is also possible that a functional entity is a process implemented with software and run by hardware that can be adapted to run also other software implemented processes.

Without limiting the generality and merely for illustrative purposes, we consider the operation of the network element 101 which is assumed to have a modular architecture of the kind described above. Each of the functional entities of the network element 101 is adapted to maintain an entity-specific configuration system which comprises configuration entries with the aid of which the functional entity under consideration is able to co-operate with the other functional entities in a way that the network element is capable of operating as a part of the data transfer network 100. In the exemplifying case where the data transfer network 100 is a software-defined network "SDN", one or more of the entity-specific configuration systems are at least partly based on the configuration data received from the controller 105. It is naturally also possible that the network element 101 comprises one or more such functional entities which are not configurable with the said configuration data received from the controller 105. The network element 101 comprises memory for maintaining a database that is writeable and readable by the functional entities of the network element. The functional entities are such that an exemplifying configuration entry related to one or more of the functional entities is composed of data items written by many functional entities to the database, and thereafter the relevant one or more functional entities can read the configuration entry from the database and implement the configuration entry into the one or more configuration systems of these one or more functional entities. For example, a functional entity may add a configuration entry to the database or update an existing configuration entry written to the database, wherein the added or updated configuration entry includes a request for another functional entity to act upon the added or updated configuration entry. The above-mentioned database that is commonly used by the functional entities of the network element 101 facilitates maintaining the congruence between the functional entities. In addition to the data related to the above-mentioned configuration entries, the database may contain also other data related to the configuration of the network element. For example, the database may contain data items each indicating whether a data entity belonging to a pre-determined pool of data entities is free or reserved. The data entity can be for example an identifier which relates to a given multicast group and which is associated, in the data processing carried out by the network element, with data belonging to the multicast group under consideration. In addition to data related to the configuration of the network element, the database can be used for delivering other information between the functional entities. The other information may comprise for example messages related to negotiations between the functional entities. A negotiation may concern for example one or more data formats to be used when writing data to the database. Furthermore, the database may contain data that expresses allocation of data processing resources of the network element for different usages and/or applications and/or functional entities. For example, the database may contain a data item indicating whether a particular one of the functional entities is allowed to use e.g. a computing unit of the network element.

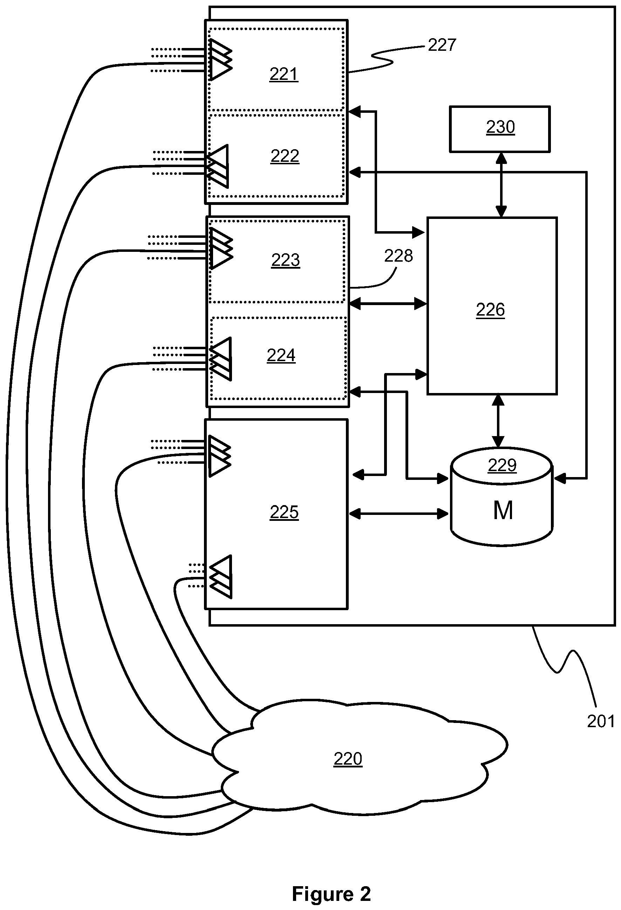

Figure 2 shows a schematic illustration of a network element 201 according to an exemplifying embodiment of the invention for a software-defined network. The network element can be, for example, an Internet Protocol "IP" router, a Multiprotocol label switching "MPLS" switch, a packet optical switch, and/or an Ethernet switch. The network element comprises functional entities 221, 222, 223, 224, 225 and 226. In this exemplifying case, the functional entities 221, 223 and 225 comprise receivers for receiving data from outside of the network element, i.e. from a data transfer network 220, and the functional entities 222, 224 and 225 comprise transmitters for transmitting data out from the network element, i.e. to the data transfer network 220. The functional entity 225 is a line interface module, and the functional entities 221 and 223 are ingress sides of line interface modules 227 and 228, respectively. The functional entities 222 and 224 are egress sides of the line interface modules 227 and 228, respectively. The functional entity 226 is a control unit. The functional entity 226 may also act a switching entity that provides data transfer connections between the line interface modules of the network element. It is also possible that the line interface modules are full mesh connected so that each line interface module has a direct data transfer connection to any other line interface module. The network element 201 may further comprise such functional entities which are not shown in figure 2.

Each of the functional entities 221-226 is adapted to maintain an entity-specific configuration system which comprises configuration entries with the aid of which the functional entity under consideration is able to co-operate with the other functional entities so that the network element is capable of co-operating with the data transfer network 220. The network element comprises memory 229 for maintaining a database that is writeable and readable by each of the functional entities 221-226. Without limiting the generality and merely for illustrative purposes, we consider the operation of a first one of the functional entities that can be for example the functional entity 221 and a second one of the functional entities that can be for example the functional entity 223. In an exemplifying situation, the functional entity 221 is adapted to write, to the database, a first part of an exemplifying configuration entry that relates to the configuration system of the functional entity 221, and the functional entity 223 is adapted to write, to the database, a second part of the said configuration entry. Hence, the configuration entry under consideration is composed of parts written by the functional entities 221 and 223. After the configuration entry has been made ready, the functional entity 221 reads the configuration entry from the database and implements the configuration entry into the configuration system of the functional entity 221.

The first part of the above-mentioned configuration entry may comprise for example a first data item expressing that when arrived data contains control data C_1, the egress port via which the data is to be forwarded is E_port_1. This first data item may have been derived from a routing table or it can be a part of other configuration data received from the data transfer network 220. The functional entity 221 writes this first data item to the database. For the sake of illustration, we assume that the E_port_1 is one of the egress ports of the functional entity 223. After the functional entity 223 has noticed, or has been notified about, the new first data item written to the database, the functional entity 223 can see that the new first data item relates to one of its egress ports, i.e. to the egress port E_port_1. The second part of the above-mentioned configuration entry may comprise for example a second data item which comprises an identifier F_ID of the functional entity 223 and a third data item which comprises an identifier EP_ID of the egress port E_Port_1. The functional entity 223 writes these second and third data items to the database, and, as a corollary, the configuration entry is ready. Thereafter, the functional entity 221 reads the configuration entry from the database and implements the configuration entry into the configuration system of the functional entity 221. When arrived data contains the above mentioned control data C_1, the functional entity 221 associates the identifier F_ID and the identifier EP_ID to the data and transmits the data to the functional entity 226. On the basis of the identifier F_ID, the functional entity 226 forwards the data to the functional entity 223. On the basis of the identifier EP_ID, the functional entity 223 forwards the data to the egress port E_Port_1.

For another example, a configuration entry may comprise a first data item expressing that when arrived data contains control data C_2, the data is to be forwarded to egress ports E_port_1, E_port_3, and E_port_6, i.e. a multicast case is under consideration. The functional entity 221 writes this first data item to the database. For the sake of illustration, we assume that the E_port_1 is one of the egress ports of the functional entity 223, the E_port_3 is one of the egress ports of the functional entity 222, and the E_port_6 is one of the egress ports of the functional entity 225. After the functional entity 226 has noticed, or has been notified about, the new first data item which expresses many egress ports, the functional entity 226 allocates, for this multicast case, a multicast group identifier MC_ID which is advantageously unique within the network element 201. The functional entity 226 writes this multicast group identifier MC_ID to the database. After the functional entities 222, 223 and 225 have noticed, or have been notified about, the new first data item and the multicast group identifier written to the database, each of the functional entities 222, 223 and 225 can see that the new first data item relates to one of its egress ports. Each of the functional entities 222, 223 and 225 writes, to the database, an identifier of the functional entity under consideration and an identifier of the relevant egress port of the functional entity under consideration. As a corollary, the configuration entry is ready. Thereafter, the functional entity 221 reads the configuration entry from the database and implements the configuration entry into the configuration system of the functional entity 221, and the functional entity 226 reads the configuration entry from the database and implements the configuration entry into the configuration system of the functional entity 226. When arrived data contains the above mentioned control data C_2, the functional entity 221 associates the identifier MC_ID to the data and transmits the data to the functional entity 226. On the basis of the identifier MC_ID, the functional entity 226 forwards copies of the data to the functional entities 222, 223 and 225 so that the copy forwarded to the functional entity 222 is associated with the identifier of the relevant egress port of the functional entity 222, the copy forwarded to the functional entity 223 is associated with the identifier of the relevant egress port of the functional entity 223, and the copy forwarded to the functional entity 225 is associated with the identifier of the relevant egress port of the functional entity 225. On the basis of the identifier of the relevant egress port, each of the functional entities 222, 223, and 225 forwards the data out from the network element 201.

In addition to data related to the configuration of the network element 201, the database can be used for delivering other information between the functional entities 221-226. The other information may comprise for example messages related to negotiations between the functional entities. Furthermore, the database may contain data that expresses allocation of data processing resources of the network element for different usages and/or applications and/or functional entities. For example, the database may contain a data item indicating whether a particular one of the functional entities 221-226 is allowed to use e.g. a computing unit 230 of the network element.

In a network element according to an exemplifying embodiment of the invention, at least one of the functional entities 221-226 is adapted to transmit, to one or more other functional entities, a notice in response to a situation in which the first mentioned functional entity has added, to the database, a new configuration entry which relates to the one or more other functional entities or changed an existing configuration entry which relates to the one or more other functional entities. Furthermore, each of the functional entities can be adapted to periodically read at least a part of the database so as to detect changes in configuration entries related to the functional entity under consideration.

In a network element according to an exemplifying embodiment of the invention, at least one of the functional entities 221-226 is adapted to treat a set of changes in one or more configuration entries related to the functional entity under consideration as a single transaction so that each of the changes is taken into use in the configuration system of the functional entity only after the whole set of changes has been implemented into the one or more configuration entries.

Each of the functional entities 221-226 may comprise one or more processor circuits, each of which can be a programmable processor circuit provided with appropriate software, a dedicated hardware processor such as, for example, an application specific integrated circuit "ASIC", or a factory configurable hardware processor such as, for example, a field programmable gate array "FPGA". Furthermore, it is also possible that two functional entities use a same hardware resource. For example, the functional entities 221 and 222 may use a same network processor "NP".

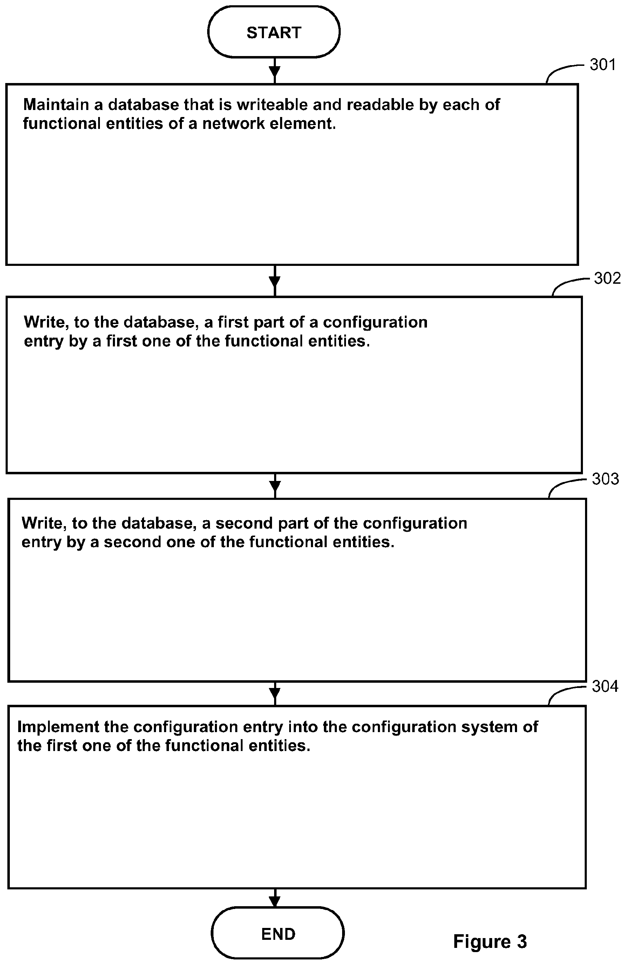

Figure 3 shows a flow chart of a method according to an exemplifying embodiment of the invention for configuring a network element of a data transfer network, wherein the network element comprises functional entities each being adapted to maintain an entity-specific configuration system which comprises configuration entries with the aid of which the functional entity under consideration is able to co-operate with the other functional entities in a way that the network element is capable of operating as a part of the data transfer network. The method comprises the following actions:
- action 301: maintaining a database that is writeable and readable by each of the above-mentioned functional entities,
- action 302: writing, to the database, a first part of one of the configuration entries by a first one of the functional entities,
- action 303: writing, to the database, a second part of the one of the configuration entries by a second one of the functional entities, and
- action 304: implementing the one of the configuration entries into the configuration system of the first one of the functional entities.

In a method according an exemplifying embodiment of the invention, the second one of the functional entities transmits, to the first one of the functional entities, a notice in response to a situation in which the one of the configuration entries is changed by the second one of the functional entities.

In a method according an exemplifying embodiment of the invention, the first one of the functional entities periodically reads at least a part of the database so as to detect changes in configuration entries related to the first one of the functional entities.

In a method according an exemplifying embodiment of the invention, the first one of the functional entities treats a set of changes in one or more of the configuration entries as a single transaction so that each of the changes is taken into use in the configuration system of the first one of the functional entities only after the whole set of changes has been implemented into the one or more of the configuration entries.

In a method according an exemplifying embodiment of the invention, the first one of the functional entities writes, to the database, a message directed to the second one of the functional entities, and the second one of the functional entities reads the message from the database.

In a method according an exemplifying embodiment of the invention, the database is adapted to contain data that expresses allocation of data processing resources of the network element for tasks to be carried out by the functional entities.

In a method according an exemplifying embodiment of the invention, the network element is at least one of the following: an Internet Protocol IP router, a MultiProtocol Label Switching MPLS switch, a packet optical switch, an Ethernet switch.

A computer program product according to an exemplifying embodiment of the invention for configuring a network element of a data transfer network comprises computer executable instructions for controlling a programmable processing system to carry out a method according to any of the above-described exemplifying embodiments of the invention.

A computer program product according to an exemplifying embodiment of the invention comprises software modules for configuring a network element of a data transfer network. The network element comprises functional entities each being adapted to maintain an entity-specific configuration system which comprises configuration entries with the aid of which the functional entity under consideration is able to co-operate with the other functional entities in a way that the network element is capable of operating as a part of the data transfer network. The software modules comprise computer executable instructions for:
- controlling a programmable processing system related to a first one of the functional entities to write, to a database, a first part of one of the configuration entries, the database being writeable and readable by each of the functional entities,
- controlling a programmable processing system related to a second one of the functional entities to write, to the database, a second part of the one of the configuration entries, and
- controlling the programmable processing system related to the first one of the functional entities to read the one of the configuration entries from the database and implement the one of the configuration entries into the configuration system of the first one of the functional entities.

The software modules can be e.g. subroutines or functions implemented with a suitable programming language and with a compiler suitable for the programming language and the programmable processing system.

A computer program product device according to an example of the invention comprises a computer readable medium, e.g. a compact disc "CD", encoded with a computer program product according to an exemplifying embodiment of invention.

A signal according to an example of the invention is encoded to carry information defining a computer program product according to an exemplifying embodiment of invention.

The specific examples provided in the description given above should not be construed as limiting the scope and/or the applicability of the appended claims.

## Claims

1. A network element (201) for a data transfer network, the network element comprising functional entities (221-226) each being adapted to maintain an entity-specific configuration system which comprises configuration entries with the aid of which the functional entity under consideration is able to co-operate with the other functional entities in a way that the network element is capable of operating as a part of the data transfer network, **characterized in that**:
- the network element comprises memory (229) for maintaining a database that is writeable and readable by each of the functional entities,
- a first one of the functional entities is adapted to write, to the database, a first part of one of the configuration entries,
- a second one of the functional entities is adapted to write, to the database, a second part of the one of the configuration entries,
- the first one of the functional entities is adapted to read the one of the configuration entries from the database, and
- the first one of the functional entities is adapted to implement the one of the configuration entries into the configuration system of the first one of the functional entities.

2. A network element according to claim 1, wherein the second one of the functional entities is adapted to transmit, to the first one of the functional entities, a notice in response to a situation in which the one of the configuration entries is changed by the second one of the functional entities.

3. A network element according to claim 1 or 2, wherein the first one of the functional entities is adapted to periodically read at least a part of the database so as to detect changes in those of the configuration entries related to the first one of the functional entities.

4. A network element according to any of claims 1-3, wherein the first one of the functional entities is adapted to treat a set of changes of the configuration entries so that each of the changes is taken into use in the configuration system of the first one of the functional entities only after the whole set of changes has been implemented into the configuration entries.

5. A network element according to any of claims 1-4, wherein the first one of the functional entities is adapted to write, to the database, a message directed to the second one of the functional entities, and the second one of the functional entities is adapted to read the message from the database.

6. A network element according to any of claims 1-5, wherein the database is adapted to contain data expressing allocation of data processing resources of the network element for tasks to be carried out by the functional entities.

7. A network element according to any of claims 1-6, wherein the network element is at least one of the following: an Internet Protocol IP router, a MultiProtocol Label Switching MPLS switch, a packet optical switch, an Ethernet switch.

8. A method for configuring a network element of a data transfer network, the network element comprising functional entities each being adapted to maintain an entity-specific configuration system which comprises configuration entries with the aid of which the functional entity under consideration is able to co-operate with the other functional entities in a way that the network element is capable of operating as a part of the data transfer network, **characterized in that** the method comprises:
- maintaining (301) a database that is writeable and readable by each of the functional entities, the database being a part of the network element,
- writing (302), to the database, a first part of one of the configuration entries by a first one of the functional entities,
- writing (303), to the database, a second part of the one of the configuration entries by a second one of the functional entities,
- reading the one of the configuration entries from the database, and
- implementing (304) the one of the configuration entries into the configuration system of the first one of the functional entities.

9. A method according to claim 8, wherein the second one of the functional entities transmits, to the first one of the functional entities, a notice in response to a situation in which the one of the configuration entries is changed by the second one of the functional entities.

10. A method according to claim 8 or 9, wherein the first one of the functional entities periodically reads at least a part of the database so as to detect changes in those of the configuration entries related to the first one of the functional entities.

11. A method according to any of claims 8-10, wherein the first one of the functional entities treats a set of changes of the configuration entries so that each of the changes is taken into use in the configuration system of the first one of the functional entities only after the whole set of changes has been implemented into the configuration entries.

12. A method according to any of claims 8-11, wherein the first one of the functional entities writes, to the database, a message directed to the second one of the functional entities, and the second one of the functional entities reads the message from the database.

13. A method according to any of claims 8-12, wherein the database is adapted to contain data expressing allocation of data processing resources of the network element for tasks to be carried out by the functional entities.

14. A method according to any of claims 8-13, wherein the network element is at least one of the following: an Internet Protocol IP router, a MultiProtocol Label Switching MPLS switch, a packet optical switch, an Ethernet switch.

15. A computer program product for configuring a network element of a data transfer network, the network element comprising functional entities each being adapted to maintain an entity-specific configuration system which comprises configuration entries with the aid of which the functional entity under consideration is able to co-operate with the other functional entities in a way that the network element is capable of operating as a part of the data transfer network, **characterized in that** the computer program product comprises computer executable instructions for:
- controlling a programmable processing system related to a first one of the functional entities to write, to a database of the network element, a first part of one of the configuration entries, the database being writeable and readable by each of the functional entities,
- controlling a programmable processing system related to a second one of the functional entities to write, to the database, a second part of the one of the configuration entries,
- controlling the programmable processing system related to the first one of the functional entities to read the one of the configuration entries from the database, and
- controlling the programmable processing system related to the first one of the functional entities to implement the one of the configuration entries into the configuration system of the first one of the functional entities.

## Patentansprüche

1. Netzwerkelement (201) für ein Datenübertragungsnetzwerk, wobei das Netzwerkelement Funktionsentitäten (221-226) umfasst, die jeweils dazu eingerichtet sind, ein entitätsspezifisches Konfigurationssystem zu pflegen, das Konfigurationseinträge umfasst, mit deren Hilfe die in Betracht gezogene Funktionsentität dazu in der Lage ist, mit den anderen Funktionsentitäten derart zusammenzuarbeiten, dass das Netzwerkelement dazu fähig ist, als ein Teil des Datenübertragungsnetzwerks zu arbeiten, **dadurch gekennzeichnet, dass**:
- das Netzwerkelement einen Speicher (229) zum Pflegen einer Datenbank umfasst, die durch jede der Funktionsentitäten beschreibbar und lesbar ist,
- eine erste der Funktionsentitäten dazu eingerichtet ist, einen ersten Teil eines der Konfigurationseinträge in die Datenbank zu schreiben,
- eine zweite der Funktionsentitäten dazu eingerichtet ist, einen zweiten Teil des einen der Konfigurationseinträge in die Datenbank zu schreiben,
- die erste der Funktionsentitäten dazu eingerichtet ist, den einen der Konfigurationseinträge aus der Datenbank zu lesen, und
- die erste der Funktionsentitäten dazu eingerichtet ist, den einen der Konfigurationseinträge in dem Konfigurationssystem der ersten der Funktionsentitäten zu implementieren.

2. Netzwerkelement nach Anspruch 1, wobei die zweite der Funktionsentitäten dazu eingerichtet ist, als Reaktion auf eine Situation, in der der eine der Konfigurationseinträge durch die zweite der Funktionsentitäten geändert wird, eine Mitteilung an die erste der Funktionsentitäten zu übertragen.

3. Netzwerkelement nach Anspruch 1 oder 2, wobei die erste der Funktionsentitäten dazu eingerichtet ist, mindestens einen Teil der Datenbank periodisch zu lesen, um Änderungen an jenen der Konfigurationseinträge in Bezug auf die erste der Funktionsentitäten zu erkennen.

4. Netzwerkelement nach einem der Ansprüche 1-3, wobei die erste der Funktionsentitäten dazu eingerichtet ist, einen Satz von Änderungen der Konfigurationseinträge zu verarbeiten, so dass jede der Änderungen in dem Konfigurationssystem der ersten der Funktionsentitäten nur in Gebrauch genommen wird, nachdem der gesamte Satz von Änderungen in den Konfigurationseinträgen implementiert wurde.

5. Netzwerkelement nach einem der Ansprüche 1-4, wobei die erste der Funktionsentitäten dazu eingerichtet ist, eine Nachricht, die an die zweite der Funktionsentitäten gerichtet ist, in die Datenbank zu schreiben, und die zweite der Funktionsentitäten dazu eingerichtet ist, die Nachricht aus der Datenbank zu lesen.

6. Netzwerkelement nach einem der Ansprüche 1-5, wobei die Datenbank dazu eingerichtet ist, Daten zu enthalten, die eine Zuteilung von Datenverarbeitungsressourcen des Netzwerkelements für durch die Funktionsentitäten durchzuführende Aufgaben ausdrücken.

7. Netzwerkelement nach einem der Ansprüche 1-6, wobei das Netzwerkelement mindestens eines der folgenden ist: ein Internetprotokoll-IP-Router, ein MultiProtocol-Label-Switching-MPLS-Switch, ein paketoptischer Switch, ein Ethernet-Switch.

8. Verfahren zur Konfiguration eines Netzwerkelements eines Datenübertragungsnetzwerks, wobei das Netzwerkelement Funktionsentitäten umfasst, die jeweils dazu eingerichtet sind, ein entitätsspezifisches Konfigurationssystem zu pflegen, das Konfigurationseinträge umfasst, mit deren Hilfe die in Betracht gezogene Funktionsentität dazu in der Lage ist, mit den anderen Funktionsentitäten derart zusammenzuarbeiten, dass das Netzwerkelement dazu fähig ist, als ein Teil des Datenübertragungsnetzwerks zu arbeiten, **dadurch gekennzeichnet, dass** das Verfahren Folgendes umfasst:
- Pflegen (301) einer Datenbank, die durch jede der Funktionsentitäten beschreibbar und lesbar ist, wobei die Datenbank ein Teil des Netzwerkelements ist,
- Schreiben (302) eines ersten Teils eines der Konfigurationseinträge in die Datenbank durch eine erste der Funktionsentitäten,
- Schreiben (303) eines zweiten Teils des einen der Konfigurationseinträge in die Datenbank durch eine zweite der Funktionsentitäten,
- Lesen des einen der Konfigurationseinträge aus der Datenbank und
- Implementieren (304) des einen der Konfigurationseinträge in dem Konfigurationssystem der ersten der Funktionsentitäten.

9. Verfahren nach Anspruch 8, wobei die zweite der Funktionsentitäten als Reaktion auf eine Situation, in der der eine der Konfigurationseinträge durch die zweite der Funktionsentitäten geändert wird, eine Mitteilung an die erste der Funktionsentitäten überträgt.

10. Verfahren nach Anspruch 8 oder 9, wobei die erste der Funktionsentitäten mindestens einen Teil der Datenbank periodisch liest, um Änderungen an jenen der Konfigurationseinträge in Bezug auf die erste der Funktionsentitäten zu erkennen.

11. Verfahren nach einem der Ansprüche 8-10, wobei die erste der Funktionsentitäten einen Satz von Änderungen der Konfigurationseinträge verarbeitet, so dass jede der Änderungen in dem Konfigurationssystem der ersten der Funktionsentitäten nur in Gebrauch genommen wird, nachdem der gesamte Satz von Änderungen in den Konfigurationseinträgen implementiert wurde.

12. Verfahren nach einem der Ansprüche 8-11, wobei die erste der Funktionsentitäten eine Nachricht, die an die zweite der Funktionsentitäten gerichtet ist, in die Datenbank schreibt und die zweite der Funktionsentitäten die Nachricht aus der Datenbank liest.

13. Verfahren nach einem der Ansprüche 8-12, wobei die Datenbank dazu eingerichtet ist, Daten zu enthalten, die eine Zuteilung von Datenverarbeitungsressourcen des Netzwerkelements für durch die Funktionsentitäten durchzuführende Aufgaben ausdrücken.

14. Verfahren nach einem der Ansprüche 8-13, wobei das Netzwerkelement mindestens eines der folgenden ist:
ein Internetprotokoll-IP-Router, ein MultiProtocol-Label-Switching-MPLS-Switch, ein paketoptischer Switch, ein Ethernet-Switch.

15. Computerprogrammprodukt zur Konfiguration eines Netzwerkelements eines Datenübertragungsnetzwerks, wobei das Netzwerkelement Funktionsentitäten umfasst, die jeweils dazu eingerichtet sind, ein entitätsspezifisches Konfigurationssystem zu pflegen, das Konfigurationseinträge umfasst, mit deren Hilfe die in Betracht gezogene Funktionsentität dazu in der Lage ist, mit den anderen Funktionsentitäten derart zusammenzuarbeiten, dass das Netzwerkelement dazu fähig ist, als ein Teil des Datenübertragungsnetzwerks zu arbeiten, **dadurch gekennzeichnet, dass** das Computerprogrammprodukt computerausführbare Anweisungen umfasst zum:
- Steuern eines programmierbaren Verarbeitungssystems in Bezug auf eine erste der Funktionsentitäten dahingehend, einen ersten Teil eines der Konfigurationseinträge in eine Datenbank des Netzwerkelements zu schreiben, wobei die Datenbank durch jede der Funktionsentitäten beschreibbar und lesbar ist,
- Steuern eines programmierbaren Verarbeitungssystems in Bezug auf eine zweite der Funktionsentitäten dahingehend, einen zweiten Teil des einen der Konfigurationseinträge in die Datenbank zu schreiben,
- Steuern des programmierbaren Verarbeitungssystems in Bezug auf die erste der Funktionsentitäten dahingehend, den einen der Konfigurationseinträge aus der Datenbank zu lesen, und
- Steuern des programmierbaren Verarbeitungssystems in Bezug auf die erste der Funktionsentitäten dahingehend, den einen der Konfigurationseinträge in dem Konfigurationssystem der ersten der Funktionsentitäten zu implementieren.

## Revendications

1. Élément de réseau (201) pour un réseau de transfert de données, l'élément de réseau comprenant des entités fonctionnelles (221-226) étant chacune adaptée pour conserver un système de configuration spécifique à une entité qui comprend des entrées de configuration à l'aide desquelles l'entité fonctionnelle prises en compte est capable de coopérer avec les autres entités fonctionnelles d'une manière telle que l'élément de réseau soit capable de fonctionner comme une partie du réseau de transfert de données, **caractérisé en ce que** :
- l'élément de réseau comprend une mémoire (229) pour conserver une base de données qui peut être écrite et lue par chacune des entités fonctionnelles,
- une première des entités fonctionnelles est adaptée pour écrire, dans la base de données, une première partie d'une des entrées de configuration,
- une seconde des entités fonctionnelles est adaptée pour écrire, dans la base de données, une seconde partie d'une des entrées de configuration,
- la première des entités fonctionnelles est adaptée pour lire une des entrées de configuration de la base de données, et
- la première des entités fonctionnelles est adaptée pour implémenter une des entrées de configuration dans le système de configuration de la première des entités fonctionnelles.

2. Élément de réseau selon la revendication 1, dans lequel la seconde des entités fonctionnelles est adaptée pour transmettre, à la première des entités fonctionnelles, une notification en réponse à une situation dans laquelle une des entrées fonctionnelles est modifiée par la seconde des entités fonctionnelles.

3. Élément de réseau selon la revendication 1 ou 2, dans lequel la première des entités fonctionnelles est adaptée pour lire périodiquement au moins une partie de la base de données de manière à détecter les changements dans les entrées de configuration relatives à la première des entités fonctionnelles.

4. Élément de réseau selon une quelconque des revendications 1-3, dans lequel la première des entités fonctionnelles est adaptée pour traiter un ensemble de modifications des entrées de configuration de sorte que chacune des modifications soit utilisée dans le système de configuration de la première des entités fonctionnelles seulement après que le premier ensemble de modifications a été implémenté dans les entrées de configuration.

5. Élément de réseau selon une quelconque des revendications 1-4, dans lequel la première des entités fonctionnelles est adaptée pour écrire, dans la base de données, un message dirigé vers la seconde des entités fonctionnelles et la seconde des entités fonctionnelles est adaptée pour lire le message dans la base de données.

6. Élément de réseau selon une quelconque des revendications 1-5, dans lequel la base de données est adaptée pour contenir des données exprimant l'allocation des ressources de traitement de données de l'élément de réseau pour des tâches à effectuer par les entités fonctionnelles.

7. Éléments de réseau selon une quelconque des revendications 1-6, dans lequel l'élément de réseau est au moins un des suivants : un routeur de protocole Internet IP, un commutateur de commutation par étiquette multiprotocoles MPLS, un commutateur optique par paquets, un commutateur Ethernet.

8. Procédé de configuration d'un élément de réseau d'un réseau de transfert de données, l'élément de réseau comprenant des entités fonctionnelles étant chacune adaptées pour conserver un système de configuration spécifique à une entité qui comprend des entrées de configuration à l'aide desquelles l'entité fonctionnelle prise en compte est capable de coopérer avec les autres entités fonctionnelles d'une manière telle que l'élément de réseau soit capable de fonctionner comme une partie du réseau de transfert de données, **caractérisé en ce que** le procédé comprend de :
- conserver (301) une base de données qui peut être écrite et lue par chacune des entités fonctionnelles, la base de données faisant partie de l'élément de réseau,
- écrire (302), dans la base de données, une première partie d'une des entrées de configuration par une première des entités fonctionnelles,
- écrire (303), dans la base de données, une seconde partie d'une des entrées de configuration par une seconde des entités fonctionnelles,
- lire une des entrées de configuration dans la base de données et
- implémenter (304) une des entrées de configuration dans le système de configuration d'une des entités fonctionnelles.

9. Procédé selon la revendication 8, dans lequel la seconde des entités fonctionnelles transmet, à la première des entités fonctionnelles, une notification en réponse à une situation dans laquelle une des entrées de configuration est modifiée par la seconde des entités fonctionnelles.

10. Procédé selon la revendication 8 ou 9, dans lequel la première des entités fonctionnelles lit périodiquement au moins une partie de la base de données de manière à détecter des modifications dans les entrées de configuration relatives à la première des entités fonctionnelles.

11. Procédé selon une quelconque des revendications 8-10, dans lequel la première des entités fonctionnelles traite un ensemble de modifications des entrées de configuration de sorte que chacune des modifications soit utilisée dans le système de configuration de la première des entités fonctionnelles seulement après que la totalité de l'ensemble de modifications a été implémentée dans les entrées de configuration.

12. Procédé selon une quelconque des revendications 8-11, dans lequel la première des entités fonctionnelles écrit, dans la base de données un message dirigé vers la seconde des entités fonctionnelles et la seconde des entités fonctionnelles lit le message dans la base de données.

13. Procédé selon une quelconque des revendications 8-12, dans lequel la base de données est adaptée pour contenir des données exprimant l'allocation des ressources de traitement de données de l'élément de réseau pour des tâches à effectuer par les entités fonctionnelles.

14. Procédé selon une quelconque des revendications 8-13, dans lequel l'élément de réseau est au moins un des suivants : un routeur de protocole Internet IP, un commutateur de commutation par étiquette multiprotocoles MPLS, un commutateur optique par paquets, un commutateur Ethernet.

15. Produit de programme informatique pour configurer un élément de réseau d'un réseau de transfert de données, l'élément de réseau comprenant des entités fonctionnelles étant chacune adaptées pour conserver un système de configuration spécifique à une entité qui comprend des entrées de configuration à l'aide desquelles l'entité fonctionnelle prise en compte est capable de coopérer avec les autres entités fonctionnelles d'une manière telle que l'élément de réseau soit capable de fonctionner comme une partie du réseau de transfert de données, **caractérisé en ce que** le produit de programme informatique comprend des instructions exécutables par ordinateur pour :
- commander un système de traitement programmable relatif à première des entités fonctionnelles pour écrire, dans une base de données de l'élément de réseau, une première partie d'une des entrées de configuration, la base de données pouvant être écrite et lue par chacune des entités fonctionnelles,
- commander un système de traitement programmable relatif à une seconde des entités fonctionnelles pour écrire, dans la base de données, une seconde partie d'une des entrées de configuration,
- commander le système de traitement programmable relatif à la première des entités fonctionnelles pour lire une des entrées de configuration de la base de données, et
- commander le système de traitement programmable relatif à la première des entités fonctionnelles pour implémenter une des entrées de configuration dans le système de configuration de la première des entités fonctionnelles.
